# FASCICULE DE BREVET EUROPEEN

(11) **EP 2 652 279 B1**
(45) Date de publication et mention de la délivrance du brevet: **13.05.2015**
(21) Numéro de dépôt: 10807707.4
(22) Date de dépôt: 15.12.2010
(51) Int. Cl.: F01N 3/28, F01N 3/20, F01N 13/02

(54) **LIGNE D'ÉCHAPPEMENT AVEC DISPOSITIF D'INJECTION DE RÉACTIF GAZEUX**
ABGASANLAGE MIT VORRICHTUNG ZUR INJEKTION VON GASFÖRMIGEM REAGENZIEN
EXHAUST LINE WITH DEVICE FOR INJECTING GASEOUS REAGENT

(43) Date de publication de la demande: 23.10.2013
(73) Titulaire: Faurecia Systèmes d'Echappement, 92000 Nanterre (FR)
(72) Inventeur: GREBER, Frédéric, F-25150 Ecot (FR)
(74) Mandataire: Domenego, Bertrand
(86) Numéro de dépôt international: PCT/FR2010/052751
(87) Numéro de publication internationale: WO 2012/080585

(56) Documents cités:
- EP-A1- 2 019 190
- WO-A1-2008/115841
- WO-A1-2010/146285
- JP-A- 2009 250 171
- US-A1- 2009 019 842
- US-A1- 2010 083 643

## Description

La présente invention concerne en général les lignes d'échappement de véhicules automobiles équipés de dispositifs d'injection d'un réducteur gazeux pour un catalyseur de réduction sélective des gaz d'échappement d'un moteur.

Plus précisément, l'invention concerne une ligne d'échappement de véhicule automobile, selon le préambule de la revendication 1.

US 2010/0083643 décrit une telle ligne d'échappement. Un mélangeur statique est placé dans le tronçon d'injection, en aval de l'injecteur.

US 2009/0019842 décrit une ligne d'échappement similaire, avec un mélangeur statique placé en amont de l'injecteur.

Une telle ligne d'échappement est prévue pour équiper un moteur à combustion interne, par exemple Diesel.

On connaît des lignes d'échappement comportant un système de réduction des oxydes d'azote et un injecteur d'un réducteur, tel que l'urée, placé en amont de ce système. La configuration la plus répandue des zones d'injections d'urée se situe généralement entre un filtre à particules (précédé d'un catalyseur d'oxydation) en amont et un catalyseur à réduction sélective (CRS ou SCR en anglais) des oxydes d'azote en aval. Une autre solution assez répandue consiste à placer la zone d'injection entre le catalyseur d'oxydation et soit un filtre à particules imprégné pour traiter la réduction des oxydes d'azote, soit un catalyseur SCR suivi d'un filtre à particules classique.

Or dans les deux cas, les zones d'injection courantes comprennent à partir de la face de sortie du monolithe amont (qui est soit un filtre à particules ou un catalyseur d'oxydation) jusqu'à la face d'entrée du monolithe suivant (qui est soit un catalyseur SCR, soit un filtre à particule imprégné SCR ou un catalyseur SCR suivit d'un filtre à particule standard) : un cône convergeant qui réduit le diamètre de passage des gaz, un tube supportant l'injecteur et un cône d'entrée divergeant qui augmente le diamètre de passage des gaz. En outre, dans la majorité des cas, les zones d'injection comprennent un mélangeur à l'intérieur du tube après le support de l'injecteur.

Un tel agencement impose une longueur incompressible notamment due à la présence des cônes convergeant et divergeant. En outre, pour assurer un fonctionnement correct d'un système d'injection d'urée il faut que les fonctions d'injection, d'évaporation, d'hydrolyse-thermolyse de l'urée en ammoniac, et de mélange de l'ammoniac avec les gaz d'échappement soient assurées afin d'obtenir une dispersion très homogène de l'ammoniac dans les gaz d'échappement sur la face d'entrée du monolithe aval. Cette transformation de l'urée en ammoniac et le mélange entre l'ammoniac et les gaz d'échappement nécessitent du temps et par conséquent une distance de parcours importante.

Au total, en optimisant le plus possible les différentes fonctions, la distance entre les deux monolithes peut être réduite à 200 mm. Néanmoins un tel agencement avec une distance réduite s'avère délicat et coûteux à réaliser.

Certaines lignes d'échappement sont équipées de dispositifs d'injection d'ammoniac sous forme gazeuse, remplaçant l'injection d'urée. Le tronçon d'injection d'ammoniac gazeux peut être situé entre les deux monolithes, ce qui ici encore impose une longueur incompressible entre les monolithes. En tout état de cause, cette longueur doit permettre un bon mélange entre l'ammoniac injecté et les gaz d'échappement.

Dans ce contexte, l'invention vise à proposer une ligne d'échappement dont le fonctionnement est plus satisfaisant, d'encombrement réduit et moins coûteuse à réaliser.

A cette fin, l'invention porte sur une ligne d'échappement du type précité, caractérisée en ce que le tronçon d'injection comporte au moins une première coupelle disposée à l'intérieur du canal de circulation dans le trajet du flux de gaz d'échappement de telle sorte que le trajet moyen des veines de gaz d'échappement soit supérieur d'au moins 20% par rapport à la longueur déterminée,
en ce que le tronçon d'injection comporte une seconde coupelle disposée à l'intérieur du canal de circulation entre la face amont et la première coupelle,
et en ce que l'injection du réactif est réalisée entre la première coupelle et la seconde coupelle.

La ligne d'échappement peut comporter une ou plusieurs des caractéristiques ci-dessous, considérées individuellement ou selon toutes les combinaisons techniquement possibles :
- la longueur déterminée est sensiblement comprise entre 40 et 140 mm ;
- la première coupelle a un fond s'enroulant en spirale autour de la ligne centrale du tronçon d'injection ;
- le fond de la première coupelle s'enroule en spirale autour de la ligne centrale du tronçon d'injection en faisant trois quarts de tour ;
- la première coupelle a une ouverture à l'extrémité de la spirale la plus écartée de la face amont ;
- la première coupelle comporte un becquet à l'extrémité de la spirale la plus écartée de la face amont ;
- le becquet prolonge le fond de la première coupelle vers la face amont et vers l'extérieur de la spirale ;
- la seconde coupelle ayant un fond s'enroulant en spirale autour de la ligne centrale du tronçon d'injection ;
- la seconde coupelle a une ouverture à l'extrémité de la spirale la plus écartée de la face amont ;
- la seconde coupelle a une ouverture à l'extrémité de la spirale la plus proche de la face amont ;
- les deux coupelles définissent entre elles un conduit en spirale, partant de l'ouverture de la seconde coupelle et allant à l'ouverture de la première coupelle, s'étendant sur au moins 180°, de préférence 275°, et ayant une section droite sensiblement supérieure à 2300 mm² ;
- la première coupelle comporte une paroi arrondie présentant une zone centrale en saillie vers la face amont et une zone périphérique en creux tournée vers la face amont entourant la zone centrale en saillie, une ouverture étant pratiquée dans la paroi de la première coupelle entre la zone centrale en saillie et la zone périphérique en creux ;
- la seconde coupelle comporte une paroi arrondie présentant une zone centrale en creux tournée vers la face amont et une zone périphérique en saillie vers la face amont entourant la zone centrale en creux, une ouverture étant pratiquée dans la paroi de la seconde coupelle entre la zone centrale en creux et la zone périphérique en saillie ;
- les première et seconde coupelles sont conformées pour conférer un mouvement hélicoïdal aux gaz d'échappement depuis l'ouverture de la seconde coupelle jusqu'à l'ouverture de la première coupelle ;
- l'ouverture de la première coupelle et l'ouverture de la seconde coupelle sont décalées angulairement l'une par rapport à l'autre autour de la ligne centrale ;
- la coupelle a des perforations de diamètre sensiblement égal à 5 mm ou une ouverture ;
- la première coupelle comprend une couche de tricot métallique sur au moins une partie de sa surface ;
- l'injecteur de réactif est orienté de telle sorte que la direction d'injection est perpendiculaire au tronçon d'injection ; et
- l'injecteur de réactif est orienté de telle sorte que la direction d'injection est parallèle à la tangente au tronçon d'injection.

D'autres caractéristiques et avantages de l'invention ressortiront de la description détaillée qui en est donnée ci-dessous, à titre indicatif et nullement limitatif, en référence aux figures annexées, parmi lesquelles :
- la figure 1 est une vue éclatée en perspective de la ligne d'échappement selon un mode de réalisation de l'invention,
- la figure 2 est une vue éclatée en perspective de la ligne d'échappement de la figure 1 illustrant son fonctionnement,
- la figure 3 est une vue compacte en perspective de la ligne d'échappement de la figure 1,
- les figures 4, 5, 6 et 7 sont des vues de la ligne d'échappement de la figure 1 pourvue d'un dispositif d'homogénéisation du mélange gaz/ammoniac,
- la figure 8 est une vue de profil d'un deuxième mode de réalisation de la ligne d'échappement selon l'invention,

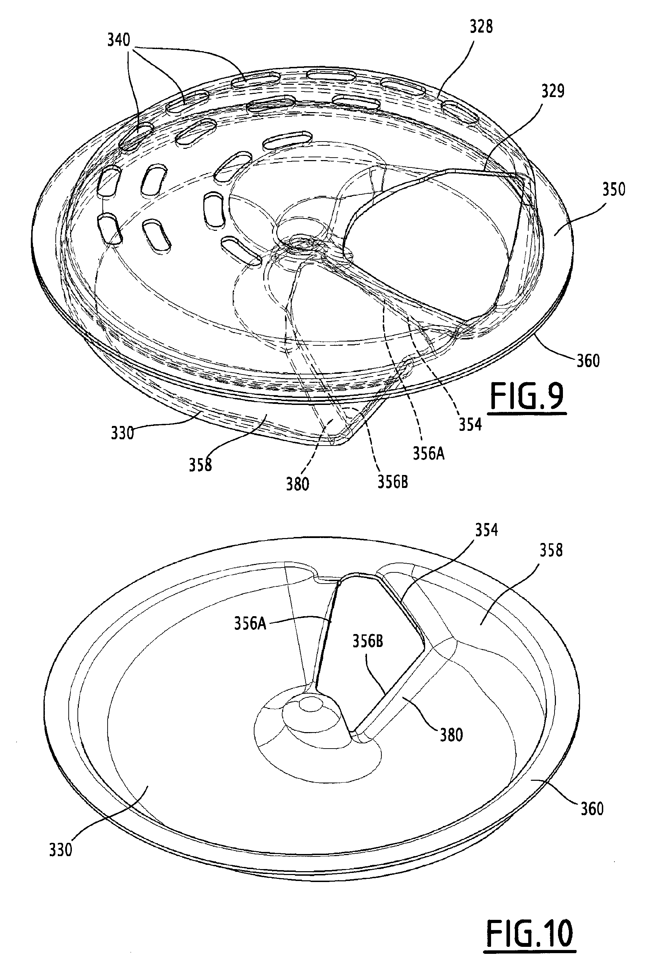

- la figure 9 est une vue en perspective des coupelles du deuxième mode de réalisation de la ligne d'échappement de la figure 8,
- la figure 10 est une vue en perspective d'une des coupelles du deuxième mode de réalisation de la ligne d'échappement de la figure 8,
- la figure 11 est une vue de profil d'un troisième mode de réalisation de la ligne d'échappement selon l'invention,
- la figure 12 est une autre vue de profil du troisième mode de réalisation de la ligne d'échappement de la figure 11, et

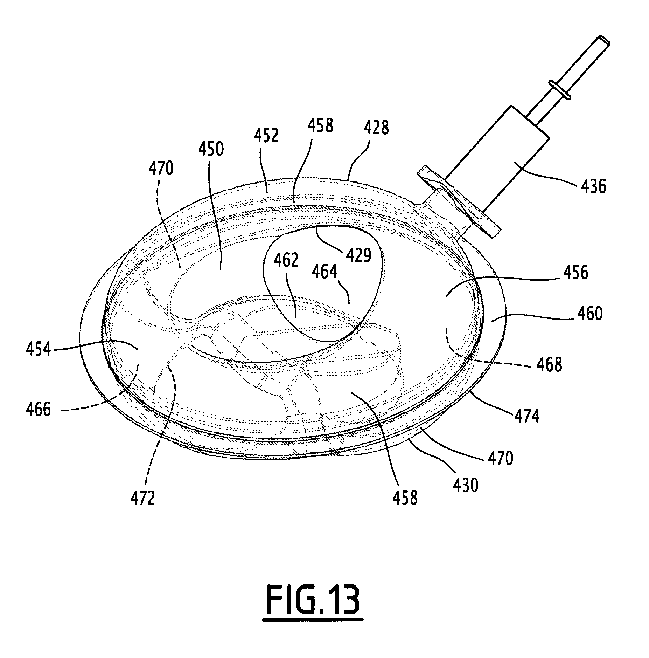

- la figure 13 est une vue en perspective des coupelles du troisième mode de réalisation de la ligne d'échappement de la figure 11.

Dans la description qui va suivre, l'amont et l'aval seront entendus relativement au sens de circulation normal des gaz d'échappement à travers la ligne d'échappement, indiqué par les flèches sur les figures.

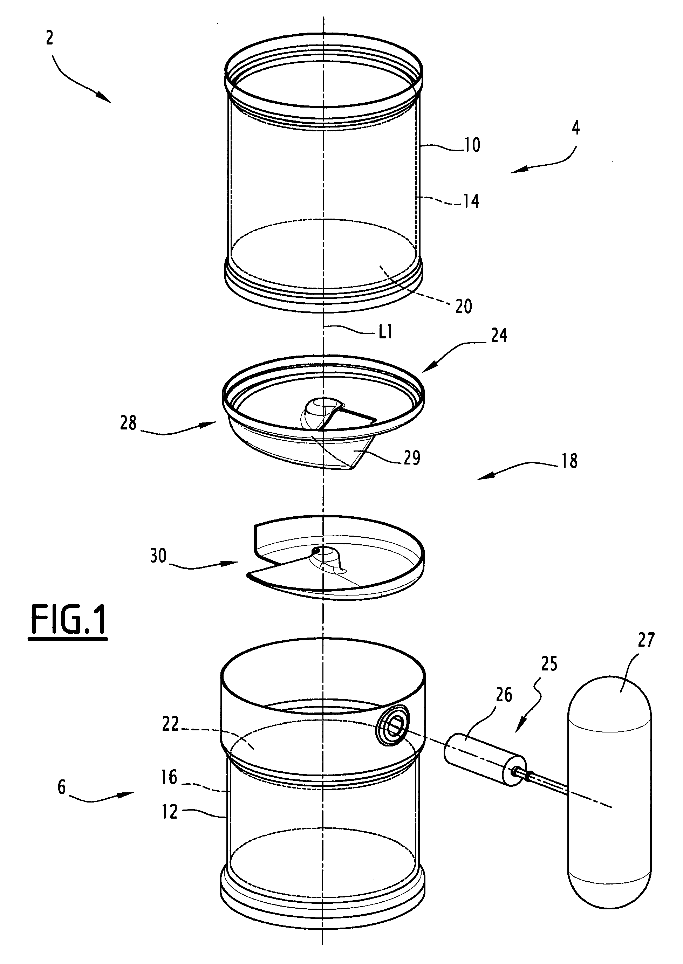

La ligne d'échappement 2 représentée de manière partielle sur la figure 1 est prévue pour être montée sur un véhicule automobile équipé d'un moteur à combustion interne, par exemple un Diesel. La ligne d'échappement 2 comporte deux dispositifs 4, 6 de traitement des gaz d'échappement. Chaque dispositif 4, 6 de traitement des gaz d'échappement comprend une enveloppe externe 10, 12 et un monolithe 14, 16 disposé à l'intérieur de l'enveloppe 10, 12.

Par exemple, le dispositif 14 amont de traitement des gaz d'échappement est un filtre à particules ou un catalyseur d'oxydation et le dispositif 16 aval de traitement des gaz d'échappement est un catalyseur SCR, ou un filtre à particule imprégné SCR ou un catalyseur SCR suivi d'un filtre à particule standard.

Le monolithe d'un catalyseur d'oxydation ou SCR comprend, par exemple, une structure perméable aux gaz recouverte de métaux catalytiques favorisant l'oxydation des gaz de combustion et/ou la réduction des oxydes d'azote. Le monolithe d'un filtre à particules est adapté pour retenir les particules de suies émises par le moteur et éventuellement pour fixer les polluants gazeux.

La ligne d'échappement 2 comporte en outre un tronçon d'injection 18 disposé entre une face amont 20 définie par le monolithe amont 14 et une face aval 22 définie par le monolithe aval 16. La face amont 20 est la face par laquelle les gaz d'échappement quittent le monolithe amont 14 et la face aval 22 est la face par laquelle les gaz d'échappement entrent dans le monolithe aval 16.

Le tronçon d'injection 18 comprend un canal 24 de circulation d'un flux de gaz d'échappement s'étendant de la face amont 20 à la face aval 22.

La ligne d'échappement 2 comprend encore un dispositif d'injection 25, qui comporte lui-même un injecteur de réactif 26 monté sur le tronçon d'injection 18 et prévu pour injecter sous forme gazeuse un réactif dans le tronçon d'injection 18, et un stockage 27 prévu pour alimenter l'injecteur 26 en réactif sous forme gazeuse.

Le canal 24 a une ligne centrale L1 présentant une longueur déterminée entre les faces amont 20 et aval 22. La ligne centrale L1 est la ligne passant par les centres géométriques des sections droites du canal de circulation 24. Dans l'exemple représenté, c'est la droite parallèle à l'axe des monolithes amont et aval. Elle est perpendiculaire aux faces amont 20 et aval 22 et passe en leurs centres.

Le tronçon d'injection 18 comporte une coupelle 28 disposée à l'intérieur du canal 24 de circulation dans le trajet du flux de gaz d'échappement. Cette coupelle 28 est appelée déversoir. Le déversoir 28 a un fond s'enroulant en spirale autour de la ligne centrale du tronçon d'injection et une grande ouverture 29 à l'extrémité de la spirale la plus écartée de la face amont. L'ouverture 29 est inclinée à la fois par rapport à la ligne centrale L1 et par rapport à un plan perpendiculaire à la ligne centrale L1.

Le diamètre de la coupelle 28 est égal au diamètre intérieur du canal de circulation des gaz d'échappement. Elle s'étend dans toute la section droite du canal de circulation 24. Le bord périphérique de la coupelle 28 porte contre la surface interne du canal de circulation.

La forme spiralée du déversoir 28 initie le mouvement tournant des gaz d'échappement, la seule échappatoire étant en aval. Les gaz d'échappement réalisent environ un tour complet.

La partie la plus haute du déversoir 28 est à environ 6 mm de la face 20 de sortie du monolithe amont. Selon une variante, cette distance peut être augmentée jusqu'à 10 mm pour ne pas augmenter d'une façon trop importante la contre pression.

En outre, le tronçon d'injection 18 comporte une seconde coupelle 30, appelée « canal », disposée à l'intérieur du canal 24 de circulation entre la première coupelle 28 et la face aval 22, la seconde coupelle 30 ayant un fond s'enroulant en spirale autour de la ligne centrale L1 du tronçon d'injection.

De préférence, le fond de la seconde coupelle 30 s'enroule en spirale autour de la ligne centrale du tronçon d'injection en faisant trois quarts de tour.

La seconde coupelle 30 a une ouverture à l'extrémité de la spirale la plus écartée de la face amont. Cette ouverture est limitée par les deux bords extrêmes du fond en spirale de la seconde coupelle 30 et par la paroi du conduit de circulation 24.

Le diamètre de la seconde coupelle 30 est égal au diamètre intérieur du canal de circulation des gaz d'échappement. Elle s'étend dans toute la section droite du canal de circulation 24, le bord périphérique de la coupelle 30 portant contre la surface interne du canal de circulation.

Les deux coupelles 28, 30 définissent entre elles un conduit en spirale, allant de l'ouverture 29 du déversoir 28 à l'ouverture de la coupelle 30 et s'étendant sur au moins 180°, de préférence 275°. Ce conduit en spirale est limité latéralement par la surface interne du canal de circulation 24.

Le conduit en spirale et les ouvertures des coupelles offrent aux gaz d'échappement une section sensiblement supérieure à 2300 mm² et de préférence au minimum de 2375 mm². Cette section correspond à la section d'un tube de 55 mm de diamètre, utilisé couramment dans les lignes d'échappement et en particulier dans la zone d'injection.

L'ouverture de la première coupelle 28 et l'ouverture de la seconde coupelle 30 sont décalées angulairement l'une par rapport à l'autre autour de la ligne centrale L1, de telle sorte à empêcher tout trajet direct parallèle à la ligne centrale L1 du tronçon d'injection du flux de gaz d'échappement.

Le tronçon d'injection a une paroi latérale cylindrique de diamètre environ 150 mm, c'est-à-dire sensiblement égal aux diamètres des dispositifs de traitement des gaz et une longueur comprise entre 40 et 140 mm. De préférence, la distance entre la face amont du monolithe amont et la face aval du monolithe aval est comprise entre 60 et 100 mm.

La paroi latérale est venue de matière de l'enveloppe externe 12 entourant le monolithe aval 16.

Les deux coupelles sont fixées à la paroi latérale par exemple, par des soudures.

La paroi latérale comprend un orifice destiné à introduire et fixer l'injecteur du réactif, ici de l'ammoniac gazeux, à la paroi entre la première coupelle 28 et la seconde coupelle 30.

Le dispositif d'injection 25 est prévu pour injecter un réactif gazeux tel que de l'ammoniac gazeux. Il est par exemple du type décrit dans la demande de brevet WO2008/077652. Le réactif gazeux peut être un autre réducteur [à compléter].

Le dispositif 25 comporte un stockage 27 d'ammoniac prévu pour fournir un flux dosé d'ammoniac gazeux à l'injecteur 26. Le stockage 27 est représenté de manière symbolique sur la figure 1. Le stockage 27 comporte typiquement un réservoir principal de stockage de l'ammoniac, un réservoir opérationnel de stockage de l'ammoniac, une première ligne raccordant le réservoir principal au réservoir opérationnel, une vanne de coupure intercalée sur la première ligne, une seconde ligne raccordant le réservoir opérationnel à l'injecteur, et une vanne de dosage intercalée sur la seconde ligne.

Le réservoir principal et le réservoir opérationnel contiennent l'un et l'autre un matériau susceptible de sélectivement ab- ou adsorber l'ammoniac gazeux, et de désorber l'ammoniac gazeux, dénommé ci-après matériau de stockage de l'ammoniac.

Le réservoir opérationnel contient par exemple du Mg(NH3)6CI2. Le réservoir principal contient par exemple du Sr(NH3)8CI2 ou du Ca(NH3)8Cl2.

Le réservoir opérationnel est équipé de moyens de chauffage du matériau de stockage de l'ammoniac. Quand le chauffage est déclenché, l'ammoniac gazeux est désorbé du matériau de stockage et s'écoule jusqu'à l'injecteur, sous l'effet de la pression de gaz à l'intérieur du réservoir opérationnel. Quand le chauffage est à l'arrêt, l'ammoniac gazeux est ab- ou adsorbé par le matériau de stockage.

Le réservoir principal est de préférence lui aussi équipé de moyens de chauffage du matériau de stockage de l'ammoniac. Le réservoir principal a pour fonction de réapprovisionner le réservoir opérationnel en ammoniac quand celui-ci est vide ou pratiquement vide.

Un réservoir tampon peut être intercalé sur la seconde ligne en amont de la vanne de dosage. La vanne de dosage est pilotée par un calculateur pour réguler la pression d'ammoniac gazeux en amont de la vanne doseuse et le débit d'ammoniac gazeux injecté dans le tronçon d'injection. Le calculateur pilote également dans ce but les moyens de chauffage du réservoir opérationnel.

Par ailleurs, le calculateur pilote les moyens de chauffage du réservoir principal et la vanne de coupure.

L'injecteur 26 est de tout type adapté pour injecter l'ammoniac gazeux dans le tronçon d'injection. L'injecteur 26 peut être un simple tube débouchant dans le tronçon d'injection 24. Il est par exemple orienté de telle sorte que la direction d'injection soit perpendiculaire à la paroi latérale du tronçon d'injection.

Selon une variante, l'injecteur est orienté de telle sorte que la direction d'injection a un angle compris entre 40° et 45° par rapport à la tangente à la paroi latérale de façon à rendre le jet co-courant avec le gaz d'échappement.

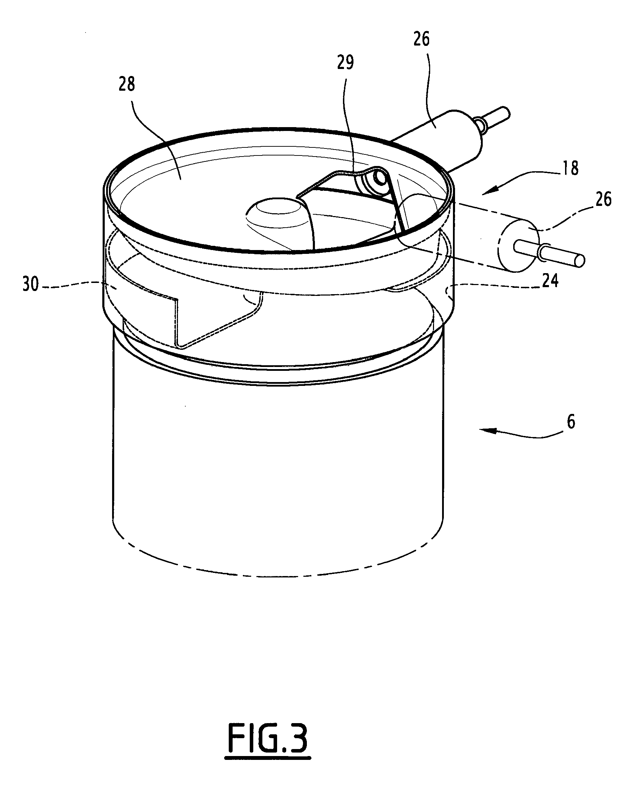

Selon une autre variante illustrée en traits mixtes sur la figure 3, l'injecteur 26 est orienté de telle sorte que la direction d'injection soit parallèle à la tangente à la paroi latérale, permettant ainsi d'obtenir un tronçon d'injection 18 plus compact.

En variante, le stockage 27 peut comprendre un réacteur chauffant chargé en un matériau tel que l'ammonium carbamate ou l'urée, ou en un autre précurseur de l'ammoniac.

De tels stockages sont décrits dans US 2006/0117741, US 6 301 879 ou US 6 399 034. Quand ces matériaux sont chauffés, ils se décomposent en produisant de l'ammoniac gazeux, qui alimente l'injecteur 26.

Selon une autre variante, l'ammoniac gazeux peut être stocké sous pression dans le stockage 27.

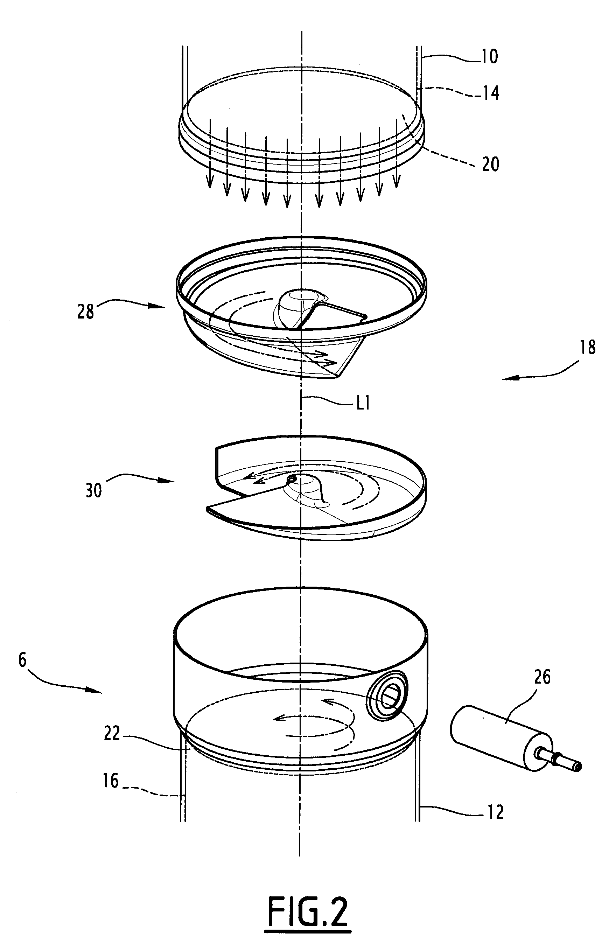

Le fonctionnement de la ligne d'échappement décrite ci-dessus va maintenant être détaillé, en regard de la figure 2 sur laquelle des veines de gaz d'échappement sont illustrées.

Après avoir traversés le monolithe amont 14, les gaz d'échappement quittent le monolithe amont 14 avec une répartition sensiblement uniforme. Le flux de gaz d'échappement est laminaire et sensiblement parallèle à la ligne centrale L1. Les gaz d'échappement arrivent sur la première coupelle 28. La circulation des gaz parallèlement à la ligne centrale L1 est bloquée par la première coupelle 28, dont la forme spiralée initie le mouvement tournant des gaz.

Ensuite les gaz entrent dans le canal 30, dont la forme spiralée entretient le mouvement tournant des gaz d'échappement.

A la sortie de la première coupelle 28 ou déversoir, l'ammoniac gazeux est injecté en partie amont du canal 30. Le mélange entre l'ammoniac gazeux et les gaz d'échappement a lieu durant le passage des gaz dans le canal 30, c'est-à-dire pendant le temps nécessaire au gaz pour faire les trois quarts de tour. La distance moyenne parcourue par les gaz d'échappement durant ces trois quarts de tour est d'environ 180 mm. Cette distance est adéquate pour permettre une excellente dispersion de l'ammoniac gazeux dans les gaz d'échappement, l'ammoniac et les gaz d'échappement formant ainsi un mélange homogène.

Une fois que les gaz ont atteint l'ouverture ou sortie du canal 30, ils traversent le monolithe aval 16.

Les gaz ayant atteint ce stade ont déjà effectué en moyenne un peu plus d'un tour ; ils ont donc acquis une vitesse tangentielle importante et « attaquent » la surface aval 22 ou surface d'entrée du monolithe 16 suivant avec cette composante. Il est connu que cette façon d'arriver sur un monolithe favorise l'obtention d'une bonne répartition, uniforme, sur la surface dudit monolithe.

Le tronçon d'injection 18 présente typiquement une longueur de 60 mm seulement et un diamètre de 150 mm, c'est-à-dire le diamètre des enveloppes externes entourant les monolithes amont et aval. Ainsi, tel que représenté sur la figure 3, le tronçon d'injection est contenu dans un cylindre de 60 x 150 mm de diamètre et permet d'augmenter le trajet moyen des veines de gaz d'échappement d'au moins 20% par rapport à la longueur déterminée entre la face amont 20 et la face aval 22.

En outre, si le débit de gaz est différent de l'exemple cité ci-dessus, alors la longueur du cylindre sera différente pour ménager une section de passage nécessaire. Si ce débit est supérieur, alors la distance entre les deux monolithes devra être augmentée. S'il est inférieur, alors elle pourra être diminuée.

Ce mode de réalisation peut être utilisé en partie horizontale ou verticale, sous plancher ou sous collecteur (en position rapprochée) d'un véhicule automobile.

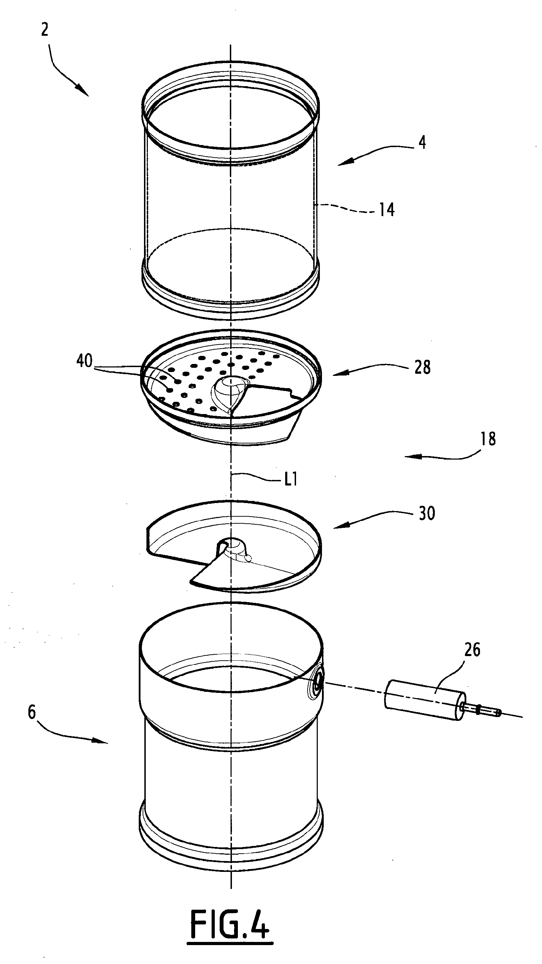

Pour assurer une homogénéisation optimale, comme visible sur la figure 4, la première coupelle 28 comporte des perforations 40 de diamètre sensiblement égal à 5mm.

Par exemple, si le jet d'ammoniac gazeux pénétrant dans le tronçon d'injection a peu d'énergie, il ne pénétrera pas profondément dans la veine gazeuse. La concentration en ammoniac sur le bord extérieur du canal 30 sera donc plus importante qu'au centre. La présence de perforations 40 du déversoir 28 au dessus du bord extérieur du canal 30 permettra au gaz sortant du monolithe amont 14 de court-circuiter l'entrée du canal 30 et d'appauvrir le ratio ammoniac/air au niveau de la périphérie du canal 30.

A l'inverse, si les caractéristiques du dispositif d'injection 25 sont telles qu'une grande partie de l'ammoniac se trouve à l'intérieur, dans la partie centrale, du canal 30, les perforations 40 seront à l'aplomb de cette zone.

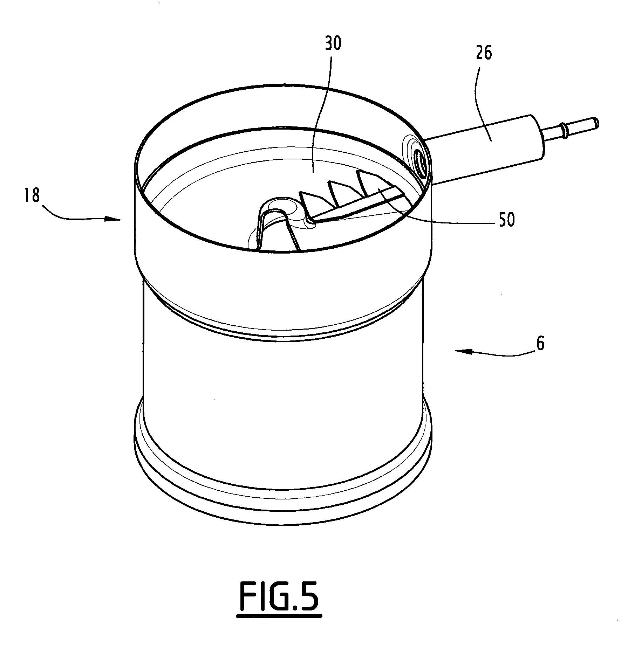

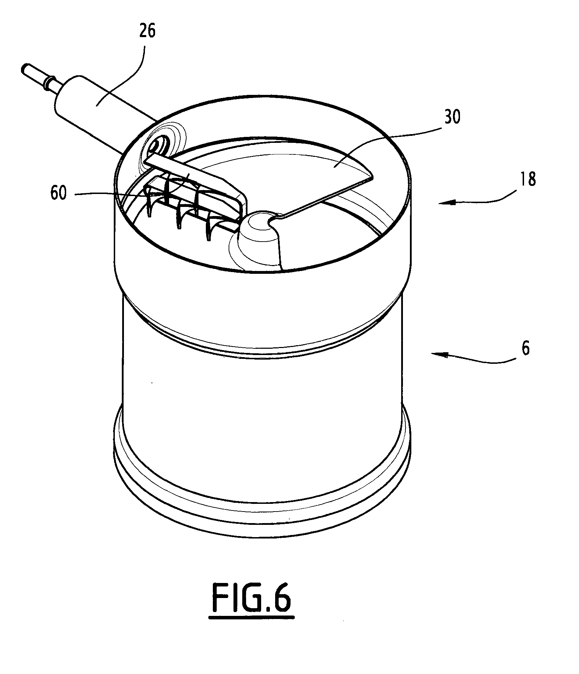

Selon une variante illustrée sur les figures 5 et 6, le tronçon d'injection 18 comporte un mélangeur linéaire situé entre les deux coupelles pour créer des obstacles qui ont pour but de perturber le flux afin d'homogénéiser les gaz d'échappement et l'ammoniac. Ce mélangeur peut avoir la forme d'ailettes 50 ou de languettes relevées fixées sur la deuxième coupelle 30 et orientées vers la première coupelle 28 (non représentée ici) telles que représentées sur la figure 5 ou encore une forme hélicoïdale 60 telle que sur la figure 6.

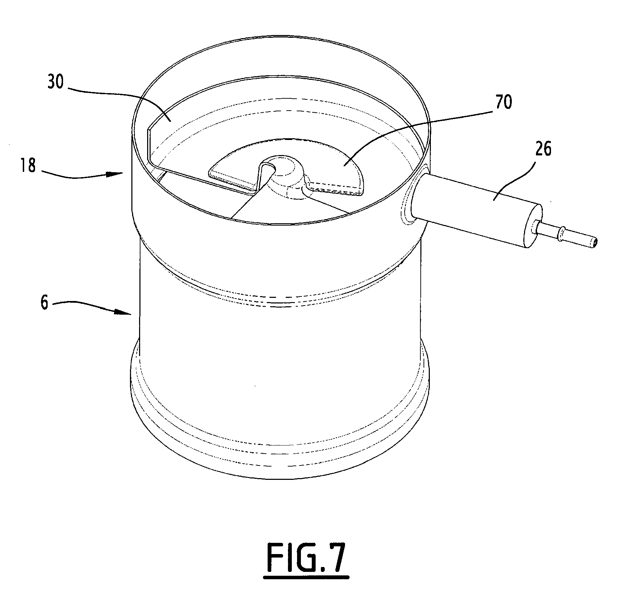

Selon une autre variante présentée sur la figure 7, la deuxième coupelle 30 comporte une couche de tricot métallique 70 (« wiremesh », en anglais) disposée sur au moins une partie de la surface de la deuxième coupelle 30. Le fait de disposer de la deuxième coupelle 30 indépendamment des autres pièces constituant le tronçon d'injection 18 avant le montage permet de déposer une couche de tricot métallique 70 à certains endroits. En effet, il est très difficile de déposer une couche de tricot métallique 70 dans un tube d'échappement.

Sur la figure 7, la partie du canal 30 recouverte par le tricot métallique 70 est plus chaude qu'une paroi externe.

Il est également possible de fixer une couche de tricot métallique 70 sur la partie inférieure de la première coupelle 28 (non représentée ici) en regard de la seconde coupelle 30.

Il est bien entendu que le tronçon d'injection 18 peut comporter une ou plusieurs de ces variantes destinées à obtenir une homogénéisation optimale du mélange gaz/ammoniac, considérées individuellement ou selon toutes les combinaisons techniquement possibles

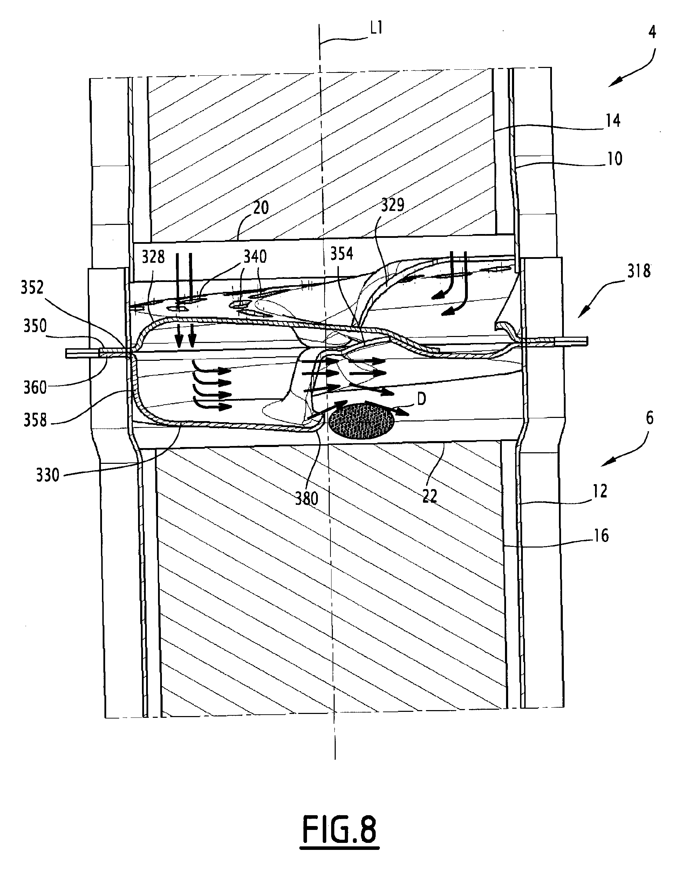

Un deuxième mode de réalisation du tronçon d'injection 318 est illustré sur les figures 8 (vue de profil), 9 et 10 (vues en perspective). Le tronçon d'injection 318 comprend une première coupelle 328 et une seconde coupelle 330.

L'enveloppe externe 12 du dispositif 6 aval de traitement des gaz d'échappement est fixée de manière étanche aux gaz d'échappement à la partie inférieure de l'enveloppe externe 10 du dispositif 4 amont de traitement des gaz d'échappement. Le monolithe aval 16 et les deux coupelles 328, 330 sont à l'intérieur de l'enveloppe externe 12 aval.

La première coupelle 328 a un fond s'enroulant en spirale autour de la ligne centrale L1 du tronçon d'injection 318. La première coupelle 328 présente une concavité tournée vers la face aval 22, de telle sorte que le fond de la première coupelle 328 forme un couvercle de la seconde coupelle 330.

La première coupelle 328 a une grande ouverture 329 à l'extrémité de la spirale la plus proche de la face amont 20. L'ouverture 329 est inclinée à la fois par rapport à la ligne centrale L1 et par rapport à un plan perpendiculaire à la ligne centrale L1.

La première coupelle 328 présente un rebord périphérique 350 prolongeant le fond de la première coupelle 328 et s'étendant sensiblement perpendiculairement à la ligne centrale L1, le rebord périphérique 350 traversant une lumière périphérique 352 ménagée dans la partie amont de l'enveloppe externe 12 aval. Le rebord périphérique 350 de la première coupelle 328 est fixé de manière étanche aux gaz d'échappement à l'enveloppe externe 12 aval par exemple par soudure.

Le fond de la première coupelle 328 comporte en outre des perforations 340 permettant d'assurer une homogénéisation optimale des gaz d'échappement.

La seconde coupelle 330 est disposée entre la première coupelle 328 et la face aval 22, la seconde coupelle 330 ayant un fond s'enroulant en spirale autour de la ligne centrale L1 du tronçon d'injection 318.

De préférence, le fond de la seconde coupelle 330 s'enroule en spirale autour de la ligne centrale L1 du tronçon d'injection 318 en faisant au moins trois quarts de tour.

La seconde coupelle 330 a une ouverture 354 à l'extrémité de la spirale la plus écartée de la face amont 20. Cette ouverture 354 est limitée par les deux bords extrêmes 356A, 356B du fond en spirale de la seconde coupelle 330 et par la paroi périphérique 358 de la seconde coupelle 330, la paroi périphérique 358 de la seconde coupelle 330 portant contre la surface interne du canal de circulation.

La seconde coupelle 330 présente un rebord périphérique 360 prolongeant la paroi périphérique 358 de la seconde coupelle 330 et s'étendant sensiblement perpendiculairement à la ligne centrale L1, le rebord périphérique 360 traversant la lumière périphérique 352 ménagée dans la partie amont de l'enveloppe externe 12 aval. Le rebord périphérique 360 de la seconde coupelle 330 est fixé de manière étanche aux gaz d'échappement à l'enveloppe externe 12 aval par exemple par soudure.

Les rebords périphériques 350, 360 des première et seconde coupelles 328, 330 sont ainsi disposées en regard et au contact l'un de l'autre et sont fixés l'un à l'autre de manière étanche aux gaz d'échappement par exemple par soudure.

Les deux coupelles 328, 330 définissent entre elles un conduit en spirale, allant de l'ouverture 329 de la première coupelle 328 à l'ouverture 354 de la seconde coupelle 330 et s'étendant sur au moins 180°, de préférence sur au moins 275°.

La seconde coupelle 330 comporte en outre un becquet 380 disposé à son extrémité aval, c'est-à-dire à l'extrémité de la spirale la plus écartée de la face amont 20. Le becquet 380 prolonge le fond de la seconde coupelle 330 vers la face amont 20 et vers l'extérieur du conduit en spirale, et est délimité par le bord extrême 356B. Le becquet 380 forme ainsi une rainure convexe s'ouvrant vers la face amont 20.

En exemple, le becquet 380 possède un rayon de courbure de 5,5 mm et une hauteur de 7 mm, la hauteur du becquet 380 pouvant être augmentée jusqu'à 10 mm. Le becquet 380 s'étend angulairement sur 10°, cette valeur pouvant être augmentée jusqu'à 90°.

Le becquet 380 permet de limiter la concentration en ammoniac juste après l'ouverture 354 comme cela sera expliqué plus en détail ultérieurement.

L'injecteur du dispositif d'injection de réactif gazeux (non représenté) est prévu pour injecter dans le conduit en spirale délimité par les deux coupelles 328, 330. A cet effet, il est fixé sur le fond de la première coupelle 328, à proximité de l'ouverture 329.

Selon une variante, l'injecteur est fixé sur la paroi périphérique 358 de la deuxième coupelle 330.

Le fonctionnement de la ligne d'échappement selon le deuxième mode de réalisation décrit ci-dessus va maintenant être détaillé, en regard de la figure 8 sur laquelle le flux de gaz d'échappement est représenté par des flèches.

Comme précédemment, les gaz d'échappement arrivent sur la première coupelle 328. Les gaz sont collectés par la première coupelle 328 après avoir traversé le monolithe amont 14.

Ensuite les gaz d'échappement pénètrent dans le conduit en spirale par l'ouverture 329 ou par les perforations 340 et circulent dans le conduit en spirale jusqu'à l'ouverture 354.

A l'entrée du conduit en spirale, l'ammoniac gazeux est injecté et se mélange avec les gaz d'échappement durant le passage des gaz d'échappement dans le conduit en spirale.

A la sortie du conduit en spirale, le becquet 380 force la couche basse de gaz d'échappement, c'est-à-dire la couche de gaz proche de la seconde coupelle 330 et fortement chargée en ammoniac, à brutalement changer de direction pour se diriger vers le haut, c'est-à-dire vers la face amont 20, et se mélanger à la couche de gaz située juste au-dessus d'elle, cette couche médiane étant moins chargée en ammoniac. Les gaz d'échappement à la sortie de la seconde coupelle 330 présentent alors une concentration en ammoniac moyenne et homogène.

De plus, la déviation soudaine de la couche basse de gaz par le becquet 380 crée une dépression juste à la sortie de la seconde coupelle 330, dans la zone référencée D sur la figure 8. Cette dépression aspire les gaz d'échappement situés entre la sortie de la seconde coupelle 330 et le monolithe aval 16, permettant une meilleure rotation des gaz d'échappement sur la face aval 22.

En exemple, dans le cas d'un tronçon d'injection 318 de 150 mm de diamètre et de 70 mm de longueur, l'indice d'uniformité de l'ammoniac sur la face aval 22 est augmenté de 5 à 9 centièmes.

En outre, de la même manière que dans les cas précédents, un mélangeur peut être intégré à l'intérieur du conduit en spirale et/ou une partie des parois du conduit en spirale peut comporter un tricot métallique afin d'assurer une homogénéisation optimale des gaz et de l'ammoniac.

L'avantage de ce mode de réalisation est que la distribution de l'ammoniac sur la face aval 22 du monolithe aval 16 est améliorée, l'ammoniac étant ainsi uniformément réparti dans le monolithe aval 16.

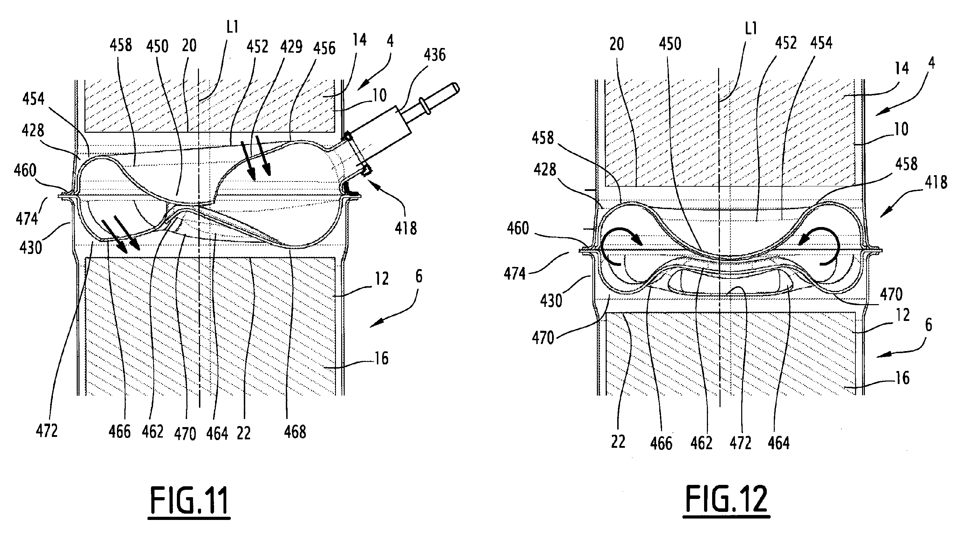

Un troisième mode de réalisation du tronçon d'injection 418 est illustré sur les figures 11, 12 (vues de profil) et 13 (vue en perspective). Le tronçon d'injection 418 comprend une première coupelle 428 et une seconde coupelle 430.

L'enveloppe externe 12 du dispositif 6 aval de traitement des gaz d'échappement est fixée de manière étanche aux gaz d'échappement à l'enveloppe externe 10 du dispositif 4 amont de traitement des gaz d'échappement par l'intermédiaire de la seconde coupelle 430. Les deux coupelles 428, 430 sont disposées à la jonction entre les enveloppes externes amont 10 et aval 12, la première coupelle 428 étant à l'intérieur de l'enveloppe externe 10 amont et la seconde coupelle 430 étant à l'intérieur de l'enveloppe externe 12 aval.

La première coupelle 428 s'ouvre vers la face aval 22 et comporte une paroi arrondie sans aucune arête vive. Cette paroi présente une zone centrale 450 en creux tournée vers la face amont 20 et une zone périphérique 452 en saillie vers la face amont 20 entourant la zone centrale en creux 450. La zone périphérique en saillie 452 comprend un tronçon périphérique bas 454 et un tronçon périphérique haut 456 opposés, le tronçon périphérique bas 454 possédant une hauteur axiale le long de la ligne centrale L1 réduite par rapport à celle du tronçon périphérique haut 456. Les tronçons périphériques bas 454 et haut 456 sont reliés l'un à l'autre par deux tronçons périphériques latéraux 458 opposés.

La première coupelle 428 est symétrique par rapport à un plan passant par la ligne centrale L1 du tronçon d'injection 418 et par l'injecteur 436 de réactif (figure 12).

Une grande ouverture 429 est pratiquée dans la paroi de la première coupelle 428 entre la zone centrale en creux 450 et le tronçon périphérique haut 456 de la zone périphérique en saillie 452. L'ouverture 429 est inclinée à la fois par rapport à la ligne centrale L1 et par rapport à un plan perpendiculaire à la ligne centrale L1. L'ouverture 429 possède une forme sensiblement triangulaire arrondie, un des sommets se trouvant vers l'injecteur 436.

La première coupelle 428 présente un rebord périphérique 460 prolongeant la paroi de la première coupelle 428 et s'étendant sensiblement perpendiculairement à la ligne centrale L1. Le rebord périphérique 460 de la première coupelle 428 est fixé de manière étanche aux gaz d'échappement à la seconde coupelle 430 par exemple par soudure.

La seconde coupelle 430 est disposée entre la première coupelle 428 et la face aval 22.

La seconde coupelle 430 s'ouvre vers la face amont 20 et comporte une paroi arrondie sans aucune arête vive. Cette paroi présente une zone centrale 462 en saillie vers la face amont 20 et une zone périphérique 464 en creux tournée vers la face amont 20 entourant la zone centrale 462. La zone périphérique en creux 464 comprend un tronçon périphérique bas 466 et un tronçon périphérique haut 468 opposés, le tronçon périphérique bas 466 possédant une hauteur axiale le long de la ligne centrale L1 réduite par rapport à celle du tronçon périphérique haut 468. Les tronçons périphériques bas 466 et haut 468 sont reliés l'un à l'autre par deux tronçons périphériques latéraux 470 opposés.

La seconde coupelle 430 est symétrique par rapport à un plan passant par la ligne centrale L1 du tronçon d'injection 418 et par l'injecteur 436 du dispositif d'injection de réactif gazeux (figure 12).

Une ouverture 472 est pratiquée dans la paroi de la seconde coupelle 430 entre la zone centrale en saillie 462 et le tronçon périphérique bas 466 de la zone périphérique en creux 464. L'ouverture 472 est inclinée à la fois par rapport à la ligne centrale L1 et par rapport à un plan perpendiculaire à la ligne centrale L1. L'ouverture 472 possède une forme en croissant de lune arrondi, le grand côté se trouvant à l'opposé de l'injecteur 436.

L'ouverture 429 de la première coupelle 428 et l'ouverture 472 de la seconde coupelle 430 sont décalées angulairement l'une par rapport à l'autre autour de la ligne centrale L1 sensiblement de 180°.

Selon une variante, une deuxième ouverture est prévue dans la paroi de la première coupelle 428 entre la zone centrale en creux 450 et le tronçon périphérique bas 454 de la zone périphérique en saillie 452, à l'opposé de l'injecteur 436 et sensiblement au droit de l'ouverture 472 de la seconde coupelle 430, de manière à court-circuiter l'ouverture 429 pour qu'une partie des gaz atteigne directement l'ouverture 472 sans passer par le canal de circulation, diminuant ainsi la contre-pression.

La seconde coupelle 430 présente un rebord périphérique 474 prolongeant la paroi de la seconde coupelle 430 et s'étendant sensiblement perpendiculairement à la ligne centrale L1. Le rebord périphérique 474 de la seconde coupelle 430 est fixé de manière étanche aux gaz d'échappement aux enveloppes externes 10 amont et 12 aval ainsi qu'au rebord périphérique 460 de la première coupelle 428 par exemple par soudure.

Les deux coupelles 428, 430 assemblées présentent une forme de « donut » et définissent entre elles deux conduits demi-annulaires, allant de l'ouverture 429 de la première coupelle 428 à l'ouverture 472 de la seconde coupelle 430.

L'injecteur 436 de réactif gazeux est prévu pour injecter dans les deux conduits demi-annulaires délimités par les deux coupelles 428, 430. A cet effet, il est fixé sur le tronçon périphérique haut 456 de la zone périphérique 452 de la première coupelle 428, à proximité de l'ouverture 429. L'injecteur 436 est orienté sensiblement à 45° par rapport à la ligne centrale L1 de telle sorte que le flux de réactif gazeux soit dirigé vers la zone centrale en saillie 462 de la seconde coupelle 430.

Selon une variante, l'injecteur 436 est orienté de telle sorte que la direction d'injection soit perpendiculaire aux deux conduits demi-annulaires.

Selon une autre variante, l'injecteur 436 est orienté de telle sorte que la direction d'injection soit parallèle à la tangente aux deux conduits demi-annulaires, permettant ainsi d'obtenir un tronçon d'injection 418 plus compact.

Le fonctionnement de la ligne d'échappement selon le troisième mode de réalisation décrit ci-dessus va maintenant être détaillé, en regard des figures 11 et 12 sur lesquelles le flux de gaz d'échappement est représenté par des flèches.

Comme précédemment, les gaz d'échappement arrivent sur la première coupelle 428. Les gaz sont collectés par la première coupelle 428 après avoir traversé le monolithe amont 14.

Ensuite les gaz d'échappement pénètrent dans le canal de circulation par l'ouverture 429 (figure 11).

A l'entrée du canal de circulation, l'ammoniac gazeux est injectée et se mélange aux gaz d'échappement durant le passage des gaz d'échappement dans le canal de circulation.

En raison de l'orientation de l'injecteur 436, le flux de gaz se répartit entre les deux conduits demi-annulaires.

Une première partie du flux de gaz emprunte ainsi un des conduits demi-annulaires et circule le long de ce conduit selon un mouvement hélicoïdal autour de la ligne centrale de ce conduit jusqu'à l'ouverture 472. La forme arrondie des deux coupelles 428, 430 initie le mouvement tournant de cette première partie du flux de gaz qui réalise au moins un tour complet, voire jusqu'à quatre tours complets autour de la ligne centrale, dans un sens anti-horaire sur la figure 12.

Pendant ce temps, une seconde partie du flux de gaz emprunte l'autre des conduits demi-annulaires et circule le long de ce conduit selon un mouvement hélicoïdal autour de la ligne centrale de ce conduit jusqu'à l'ouverture 472. La forme arrondie des deux coupelles 428, 430 initie le mouvement tournant de cette seconde partie du flux de gaz qui réalise au moins un tour complet, voire jusqu'à quatre tours complets autour de la ligne centrale, dans un sens horaire sur la figure 12.

Une fois que lez gaz ont traversé l'ouverture 472, ils vont traverser le monolithe aval 16.

En outre, de la même manière que dans les cas précédents, un mélangeur peut être intégré à l'intérieur du canal de circulation et/ou une partie des parois du canal de circulation peut comporter un tricot métallique afin d'assurer une homogénéisation optimale des gaz et de l'ammoniac.

L'avantage de ce mode de réalisation est qu'il permet un excellent mélange des gaz et de l'ammoniac.

La ligne d'échappement selon l'invention présente l'avantage de réduire la distance entre les deux faces des monolithes successifs tout en conservant une longueur suffisante de trajectoire des gaz pour assurer l'homogénéisation de l'ammoniac gazeux et des gaz d"échappement. Le trajet est suffisamment long pour que le mélange final gaz d'échappement / ammoniac soit le plus homogène possible.

## Revendications

1. Ligne d'échappement (2) de véhicule automobile comprenant :
- deux monolithes amont (14) et aval (16) de traitement des gaz d'échappement circulant dans la ligne d'échappement (2), les deux monolithes amont (14) et aval (16) étant placés en série dans la ligne d'échappement (2),
- un tronçon d'injection (18 ;318 ;418) disposé entre une face amont (20) définie par le monolithe amont (14) et une face aval (22) définie par le monolithe aval (16) et comprenant un canal de circulation (24) d'un flux de gaz d'échappement s'étendant de la face amont (20) à la face aval (22), le canal (24) ayant une ligne centrale (L1) présentant une longueur déterminée entre les faces amont (20) et aval (22),
- un dispositif d'injection (25) comportant un injecteur (26 ;436) de réactif monté sur le tronçon d'injection (18 ;318 ;418) et prévu pour injecter sous forme gazeuse le réactif dans le tronçon d'injection (18, 318, 418), et un stockage (27) prévu pour alimenter l'injecteur (26, 436) en réactif sous forme gazeuse ;
la ligne d'échappement (2) étant **caractérisée en ce que** le tronçon d'injection (18 ; 318; 418) comporte au moins une première coupelle (30; 330; 430) disposée à l'intérieur du canal de circulation (24) dans le trajet du flux de gaz d'échappement de telle sorte que le trajet moyen des veines de gaz d'échappement soit supérieur d'au moins 20% par rapport à la longueur déterminée,
**en ce que** le tronçon d'injection (18 ; 318 ; 418) comporte une seconde coupelle (28 ; 328 ; 428) disposée à l'intérieur du canal de circulation (24) entre la face amont (20) et la première coupelle (30 ; 330 ; 430),
et **en ce que** l'injection du réactif est réalisée entre la première coupelle (30 ; 330 ; 430) et la seconde coupelle (28 ; 328 ; 428).

2. Ligne d'échappement selon la revendication 1, **caractérisée en ce que** la longueur déterminée est sensiblement comprise entre 40 et 140 mm.

3. Ligne d'échappement selon l'une quelconque des revendications 1 ou 2, **caractérisée en ce que** la première coupelle (30 ; 330) a un fond s'enroulant en spirale autour de la ligne centrale (L1) du tronçon d'injection (18 ; 318).

4. Ligne d'échappement selon la revendication 3, **caractérisée en ce que** le fond de la première coupelle (30 ; 330) s'enroule en spirale autour de la ligne centrale (L1) du tronçon d'injection (18 ; 318) en faisant trois quarts de tour.

5. Ligne d'échappement selon l'une quelconque des revendications 3 ou 4, **caractérisée en ce que** la première coupelle (30 ; 330) a une ouverture (354) à l'extrémité de la spirale la plus écartée de la face amont (20).

6. Ligne d'échappement selon l'une quelconque des revendications 3 à 5, **caractérisée en ce que** la première coupelle (330) comporte un becquet (380) à l'extrémité de la spirale la plus écartée de la face amont (20).

7. Ligne d'échappement selon la revendication 6, **caractérisée en ce que** le becquet (380) prolonge le fond de la première coupelle (330) vers la face amont (20) et vers l'extérieur de la spirale.

8. Ligne d'échappement selon l'une quelconque des revendications 1 à 7, **caractérisée en ce que** la seconde coupelle (28 ;328) a un fond s'enroulant en spirale autour de la ligne centrale (L1) du tronçon d'injection (18 ;318).

9. Ligne d'échappement selon la revendication 8, **caractérisée en ce que** la seconde coupelle (28) a une ouverture (29) à l'extrémité de la spirale la plus écartée de la face amont (20).

10. Ligne d'échappement selon la revendication 8, **caractérisée en ce que** la seconde coupelle (328) a une ouverture (329) à l'extrémité de la spirale la plus proche de la face amont (20).

11. Ligne d'échappement selon l'une quelconque des revendications 8 à 10, **caractérisée en ce que** les deux coupelles (28, 30 ;328, 330) définissent entre elles un conduit en spirale, partant de l'ouverture (29 ;329) de la seconde coupelle (28 ;328) et allant à l'ouverture (354) de la première coupelle (30 ;330), s'étendant sur au moins 180°, de préférence 275°, et ayant une section droite sensiblement supérieure à 2300 mm².

12. Ligne d'échappement selon la revendication 1 ou 2, **caractérisée en ce que** la première coupelle (430) comporte une paroi arrondie présentant une zone centrale (462) en saillie vers la face amont (20) et une zone périphérique (464) en creux tournée vers la face amont (20) entourant la zone centrale en saillie (462), une ouverture (472) étant pratiquée dans la paroi de la première coupelle (430) entre la zone centrale en saillie (462) et la zone périphérique en creux (464).

13. Ligne d'échappement selon la revendication 12, **caractérisée en ce que** la seconde coupelle (428) comporte une paroi arrondie présentant une zone centrale (450) en creux tournée vers la face amont (20) et une zone périphérique (452) en saillie vers la face amont (20) entourant la zone centrale en creux (450), une ouverture (429) étant pratiquée dans la paroi de la seconde coupelle (428) entre la zone centrale en creux (450) et la zone périphérique en saillie (452).

14. Ligne d'échappement selon la revendication 13, **caractérisée en ce que** les première et seconde coupelles (428, 430) sont conformées pour conférer un mouvement hélicoïdal aux gaz d'échappement depuis l'ouverture (429) de la seconde coupelle (428) jusqu'à l'ouverture (472) de la première coupelle (430).

15. Ligne d'échappement selon la revendication 9 ou 10 en combinaison avec la revendication 5 ou selon les revendications 13 ou 14, **caractérisée en ce que** l'ouverture (354 ; 472) de la première coupelle (30 ; 330 ; 430) et l'ouverture (29 ; 329 ; 429) de la seconde coupelle (28 ; 328 ; 428) sont décalées angulairement l'une par rapport à l'autre autour de la ligne centrale (L1).

16. Ligne d'échappement selon l'une quelconque des revendications 1 à 15, **caractérisée en ce que** la coupelle (28 ;328 ;428) a des perforations (40 ;340) de diamètre sensiblement égal à 5 mm ou une ouverture.

17. Ligne d'échappement selon l'une quelconque des revendications 1 à 16, **caractérisée en ce que** la première coupelle (30 ; 330 ; 430) comprend une couche de tricot métallique (70) sur au moins une partie de sa surface.

18. Ligne d'échappement selon l'une quelconque des revendications 1 à 17, **caractérisée en ce que** l'injecteur (26 ;436) de réactif est orienté de telle sorte que la direction d'injection est perpendiculaire au tronçon d'injection (18 ;318 ;418).

19. Ligne d'échappement selon l'une quelconque des revendications 1 à 17, **caractérisée en ce que** l'injecteur (26 ;436) de réactif est orienté de telle sorte que la direction d'injection est parallèle à la tangente au tronçon d'injection (18 ;318 ;418).

## Patentansprüche

1. Kraftfahrzeugabgasleitung (2), umfassend:
- einen stromaufwärts (14) und einen stromabwärts (16) gelegenen Monolithen für die Behandlung von Abgas, das in der Abgasleitung (2) zirkuliert, wobei die stromaufwärts (14) und stromabwärts (16) gelegenen Monolithen in einer Abgasleitung (2) in Reihe angeordnet sind,
- ein Einspritzteil (18; 318; 418), das zwischen einer stromaufwärtigen Fläche (20), die durch den stromaufwärtigen Monolithen (14) definiert ist, und einer stromabwärtigen Fläche (22) angeordnet ist, die durch den stromabwärtigen Monolithen (16) definiert ist, und das einen Zirkulationskanal (24) eines Abgasstroms umfasst, der sich von der stromaufwärtigen Fläche (20) zur stromabwärtigen Fläche (22) erstreckt, wobei der Kanal (24) eine Mittellinie (L1) aufweist, die eine bestimmte Länge zwischen der stromaufwärtigen Fläche (20) und der stromabwärtigen Fläche (22) aufweist,
- eine Einspritzvorrichtung (25), die einen Injektor (26; 436) für Reaktionsmittel, der an dem Einspritzteil (18; 318; 418) angeordnet ist und vorgesehen ist, das gasförmige Reaktionsmittel in das Einspritzteil (18; 318; 418) einzuspritzen, und einen Speicher (27) aufweist, der vorgesehen ist, den Injektor (26; 436) mit dem gasförmigen Reaktionsmittel zu versorgen;
wobei die Abgasleitung (2) **dadurch gekennzeichnet ist, dass** das Einspritzteil (18; 318; 418) mindestens eine erste Schale (30; 330; 430) aufweist, die im Inneren des Zirkulationskanals (24) in dem Weg des Abgasstroms angeordnet ist, derart, dass der mittlere Weg der Abgasstromfäden um mindestens 20% in Bezug auf die bestimmte Länge länger ist,
dass das Einspritzteil (18; 318; 418) eine zweite Schale (28; 328; 428) aufweist, die in dem Inneren des Zirkulationskanals (24) zwischen der stromaufwärtigen Fläche (20) und der ersten Schale (30; 330; 430) angeordnet ist,
und dass die Einspritzung des Reaktionsmittels zwischen der ersten Schale (30; 330; 430) und der zweiten Schale (28; 328; 428) realisiert ist.

2. Abgasleitung nach Anspruch 1, **dadurch gekennzeichnet, dass** die bestimmte Länge im Wesentlichen zwischen 40 und 140 mm liegt.

3. Abgasleitung nach einem beliebigen der Ansprüche 1 oder 2, **dadurch gekennzeichnet, dass** die erste Schale (30; 330) einen Boden aufweist, der sich spiralförmig um die Mittellinie (L1) des Einspritzteils (18; 318) erstreckt.

4. Abgasleitung nach Anspruch 3, **dadurch gekennzeichnet, dass** der Boden der ersten Schale (30; 330) sich spiralförmig um die Mittellinie (L1) des Einspritzteils (18; 318) windet, wobei sie eine dreiviertel Umdrehung macht.

5. Abgasleitung nach einem beliebigen der Ansprüche 3 oder 4, **dadurch gekennzeichnet, dass** die erste Schale (30; 330) eine Öffnung (354) an dem am weitesten von der stromaufwärtigen Fläche (20) entfernt liegenden Ende der Spirale aufweist.

6. Abgasleitung nach einem beliebigen der Ansprüche 3 bis 5, **dadurch gekennzeichnet, dass** die erste Schale (330) einen Spoiler (380) an dem am weitesten von der stromaufwärtigen Fläche (20) entfernt liegenden Ende der Spirale aufweist.

7. Abgasleitung nach Anspruch 6, **dadurch gekennzeichnet, dass** der Spoiler (380) den Boden der ersten Schale (330) zu der stromaufwärtigen Fläche (20) und nach außerhalb der Spirale hin verlängert.

8. Abgasleitung nach einem beliebigen der Ansprüche 1 bis 7, **dadurch gekennzeichnet, dass** die zweite Schale (28; 328) einen Boden aufweist, der sich spiralförmig um die Mittellinie (L1) des Einspritzteils (18; 318) windet.

9. Abgasleitung nach Anspruch 8, **dadurch gekennzeichnet, dass** die zweite Schale (28) eine Öffnung (29) an dem Ende der Spirale aufweist, das am weitesten von der stromaufwärtigen Fläche (20) entfernt ist.

10. Abgasleitung nach Anspruch 8, **dadurch gekennzeichnet, dass** die zweite Schale (328) eine Öffnung (329) an dem Ende der Spirale aufweist, das am nächsten zu der stromaufwärtigen Fläche (20) liegt.

11. Abgasleitung nach einem beliebigen der Ansprüche 8 bis 10, **dadurch gekennzeichnet, dass** die zwei Schalen (28, 30; 328, 330) zwischen sich einen spiralförmigen Kanal definieren, der von der Öffnung (29; 329) der zweiten Schale (28; 328) abgeht und zur Öffnung (354) der ersten Schale (30; 330) verläuft, sich über mindestens 180°, vorzugsweise 275° erstreckt und einen geraden Querschnitt aufweist, der im Wesentlichen größer als 2300 mm² ist.

12. Abgasleitung nach Anspruch 1 oder 2, **dadurch gekennzeichnet, dass** die erste Schale (430) eine abgerundete Wand aufweist, die eine zu der stromaufwärtigen Fläche (20) hervorspringende Mittelzone (462) und eine zur stromaufwärtigen Fläche (20) gerichtete vertiefte Umfangszone (464) besitzt, die die hervorspringende Mittelzone (462) umgibt, wobei eine Öffnung (472) in der Wand der ersten Schale (430) zwischen der hervorspringenden Mittelzone (462) und der vertieften Umfangszone (464) eingearbeitet ist.

13. Abgasleitung nach Anspruch 12, **dadurch gekennzeichnet, dass** die zweite Schale (428) eine abgerundete Wand aufweist, die eine zu der stromaufwärtigen Fläche (20) gerichtete vertiefte Mittelzone (450) und eine zu der stromaufwärtigen Fläche (20) hervorspringende Umfangszone (452) besitzt, die die vertiefte Mittelzone (450) umgibt, wobei eine Öffnung (429) in der Wand der zweiten Schale (428) zwischen der vertieften Mittelzone (450) und der hervorspringenden Umfangszone (452) eingearbeitet ist.

14. Abgasleitung nach Anspruch 13, **dadurch gekennzeichnet, dass** die erste und die zweite Schale (428, 430) ausgebildet sind, den Abgasen von der Öffnung (429) der zweiten Schale (428) bis zur Öffnung (472) der ersten Schale (430) eine schraubenförmige Bewegung mitzuteilen.

15. Abgasleitung nach dem Anspruch 9 oder 10 in Kombination mit Anspruch 5 oder nach den Ansprüchen 13 oder 14, **dadurch gekennzeichnet, dass** die Öffnung (354; 472) der ersten Schale (30; 330; 430) und die Öffnung (29; 329; 429) der zweiten Schale (28; 328; 428) winkelmäßig zueinander um die Mittellinie (L1) versetzt sind.

16. Abgasleitung nach einem der beliebigen der Ansprüche 1 bis 15,
**dadurch gekennzeichnet, dass** die Schale (28; 328; 428) Lochungen (40; 340) mit einem Durchmesser im Wesentlichen gleich 5 mm oder eine Öffnung aufweist.

17. Abgasleitung nach einem der beliebigen der Ansprüche 1 bis 16,
**dadurch gekennzeichnet, dass** die erste Schale (30; 330; 430) eine Schicht eines Metallgewebes (70) über mindestens einen Teil ihrer Oberfläche umfasst.

18. Abgasleitung nach einem der beliebigen der Ansprüche 1 bis 17,
**dadurch gekennzeichnet, dass** der Injektor (26; 436) für Reaktionsmittel in der Weise gerichtet ist, dass die Einspritzrichtung senkrecht zu dem Einspritzteil (18; 318; 418) ist.

19. Abgasleitung nach einem der beliebigen der Ansprüche 1 bis 17,
**dadurch gekennzeichnet, dass** der Injektor (26; 436) für Reaktionsmittel in einer solchen Weise gerichtet ist, dass die Einspritzrichtung parallel zu der Tangente zum Einspritzteil (18; 38; 418) ist.

## Claims

1. Exhaust system (2) for an automobile vehicle, comprising:
- two, upstream (14) and downstream (16), monoliths for treatment of exhaust gases passing through the exhaust system (2), the two, upstream (14) and downstream (16), monoliths being located in series in the exhaust system (2),
- an injection portion (18; 318; 418) arranged between an upstream face (20) defined by the upstream monolith (14) and a downstream face (22) defined by the downstream monolith (16) and including a flow channel (24) of a stream of exhaust gases which extends from the upstream face (20) to the downstream face (22), the channel (24) having a central line (L1) of a determinate length between the upstream (20) and downstream (22) faces,
- an injection device (25) comprising a reagent injector (26; 436), mounted on the injection portion (18; 318; 418) and provided to inject the reagent in gaseous form into the injection portion (18, 318, 418), and a reservoir (27) provided to supply the injector (26, 436) with reagent in gaseous form;
the exhaust system (2) being **characterised in that** the injection portion (18; 318; 418) includes at least one first dish (30; 330; 430) arranged within the flow channel (24) in the path of the exhaust gas stream in such a way that the mean path of the exhaust gas flows is at least 20 % greater than the determinate length;
**in that** the injection portion (18; 318; 418) includes a second dish (28; 328; 428) arranged within the flow channel (24) between the upstream face (20) and the first dish (30; 330; 430);
and **in that** injection of the reagent is carried out between the first dish (30; 330; 430) and the second dish (28; 328; 428).

2. Exhaust system according to claim 1, **characterised in that** the determinate length is substantially between 40 and 140 mm.

3. Exhaust system according to any one of claims 1 or 2, **characterised in that** the first dish (30; 330) has a base which winds helically around the central line (L1) of the injection portion (18; 318).

4. Exhaust system according to claim 3, **characterised in that** the base of the first dish (30; 330) winds helically around the central line (L1) of the injection portion (18; 318) making three-quarters of a revolution.

5. Exhaust system according to any one of claims 3 or 4, **characterised in that** the first dish (30; 330) has an aperture (354) at that end of the helix which is most remote from the upstream face (20).

6. Exhaust system accorind to any one of claims 3 to 5, **characterised in that** the first dish (330) includes a spoiler (380) at that end of the helix which is most remote from the upstream face (20).

7. Exhaust system according to claim 6, **characterised in that** the spoiler (380) extends the base of the first dish (330) towards the upstream face (20) and towards the outside of the helix.

8. Exhaust system according to any one of claims 1 to 7, **characterised in that** the second dish (28; 328) has a base which winds helically around the central line (L1) of the injection portion (18; 318).

9. Exhaust system according to claim 8, **characterised in that** the second dish (328) has an aperture (29) at that end of the helix which is most remote from the upstream face (20).

10. Exhaust system according to claim 8, **characterised in that** the second dish (328) has an aperture (329) at that end of the helix which is closest to the upstream face (20).

11. Exhaust system according to any one of claims 8 to 10, **characterised in that** the two dishes (28, 30; 328, 330) define between them a helical passageway starting from the aperture (29; 329) of the second dish (28, 328) and proceeding to the aperture (354) of the first dish (30; 330), extending over at least 180°, preferably 275°, and having a cross-section substantially greater than 2300 mm².

12. Exhaust system according to claim 1 or 2, **characterised in that** the first dish (430) includes a rounded wall having a central zone (462) projecting out towards the upstream face (20) and a hollowed-out peripheral zone (464) turned towards the upstream face (20) and surrounding the projecting central zone (462), an aperture being provided in the wall of the first dish (430) between the projecting central zone (462) and the hollowed-out peripheral zone (464).

13. Exhaust system according to claim 12, **characterised in that** the second dish (428) includes a rounded wall having a hollowed-out central zone (450) turned towards the upstream face (20) and a peripheral zone (452) projecting out towards the upstream face (20) and surrounding the hollowed-out central zone (450), an aperture (429) being provided in the wall of the second dish (428) between the hollowed-out central zone (450) and the projecting peripheral zone (452).

14. Exhaust system according to claim 13, **characterised in that** the first and second dishes (428, 430) are shaped so as to impart a helicoidal movement to the exhaust gases from the aperture (429) of the second dish (428) as far as the aperature (472) of the first dish (430).

15. Exhaust system according to claim 9 or 10 in combination with claim 5 or according to claims 13 or 14, **characterised in that** the aperture (354; 472) of the first dish (30; 330; 430) and the aperture (29; 329; 429) of the second dish (28; 328; 428) are offset angularly from one another about the central line (L1).

16. Exhaust system according to any one of claims 1 to 15, **characterised in that** the dish (28; 328; 428) has perforations (40; 340) of a diameter substantially equal to 5 mm or an aperture.

17. Exhaust system according to any one of claims 1 to 16, **characterised in that** the first dish (30; 330, 430) has a layer of metal knit (70) on at least a part of its surface.

18. Exhaust system according to any one of claims 1 to 17, **characterised in that** the reagent injector (26; 436) is oriented in such a way that the direction of injection is perpendicular to the injection portion (18; 318; 418).

19. Exhaust system according to any one of claims 1 to 17, **characterised in that** the reagent injector (26; 436) is oriented in such a way that the direction of injection is parallel to the tangent at the injection portion (18; 318; 418).
